# EUROPÄISCHE PATENTSCHRIFT

(11) **EP 2 360 366 B1**
(45) Veröffentlichungstag und Bekanntmachung des Hinweises auf die Patenterteilung: **06.04.2016**
(21) Anmeldenummer: 11000257.3
(22) Anmeldetag: 14.01.2011
(51) Int. Cl.: F02G 5/00, F02B 41/10

(54) **Kombination von Wärmerückgewinnungssystem und APU-Anlage**
Combination of heat recovery system and APU assembly
Combinaison d'un système de récupération de chaleur et d'une installation APU

(30) Priorität: 13.02.2010 DE 102010007911
(43) Veröffentlichungstag der Anmeldung: 24.08.2011
(73) Patentinhaber: MAN Truck & Bus AG, 80995 München (DE)
(72) Erfinder: Pflanz, Tassilo, 86899 Landsberg am Lech (DE)

(56) Entgegenhaltungen:
- WO-A2-2006/138459
- DE-A1-102006 043 139
- DE-A1-102007 026 869
- DE-A1-102009 024 772
- GB-A- 2 446 810
- US-A1- 2007 234 721

## Beschreibung

### Technisches Gebiet:

Die Erfindung betrifft eine Antriebseinheit eines Kraftfahrzeugs mit einer an eine Abtriebswelle gekoppelten Brennkraftmaschine und mit einem Abwärmenutzungssystem, durch das zumindest ein Teil der aus der Brennkraftmaschine und / oder aus einem der Brennkraftmaschine nachgeschalteten Abgassystem abgeführten Abwärme mittels eines thermisch angetriebenen Energiewandlers in elektrische Energie, die wenigstens teilweise zumindest einem Nebenverbraucher und / oder einem Bordnetz des Kraftfahrzeugs zuleitbar ist, umgewandelt wird.

### Stand der Technik:

Um Kraftstoffeinsparungen, insbesondere bei mobilen Brennkraftmaschinen, wie etwa Kraftfahrzeugverbrennungsmotoren, realisieren zu können, werden derzeit vornehmlich zwei technische Lösungen priorisiert. Neben dem Einsatz unterschiedlicher Hybridkonzepte, die sich vor allem für den Stadt- und Verteilerverkehr aufgrund der dort vorkommenden Bremsund Beschleunigungsvorgänge anbieten, sind ferner Wärmerückgewinnungssysteme bekannt, die die Abwärme einer Brennkraftmaschine nutzen, um zusätzliche Antriebsenergie bereitzustellen. Derartige Systeme zur Abwärmenutzung bieten sich bei mobilen Brennkraftmaschinen vor allem für Fahrzeuge an, die im Fernverkehr betrieben werden.

Da die bekannten Verfahren zur Rückgewinnung der in modernen Verbrennungsmotoren anfallenden Verlustwärme eine Vielzahl von Komponenten benötigen, muss vor allem bei Fahrzeugen ein erheblicher zusätzlicher Geräteaufwand für die Nutzung dieser Wärme getroffen werden. Aufgrund ihres Platzbedarfs stoßen allerdings Abwärmenutzungssysteme, die auf der Integration zusätzlicher Komponenten im Fahrzeug beruhen, zunehmend an ihre Grenzen.

Insbesondere bei einem Fernverkehr-Lkw muss neben dem wirtschaftlichen Betrieb des Fahrzeugs auch für den Fahrer die Möglichkeit zur Erholung in den gesetzlich vorgeschriebenen Fahrpausen sichergestellt sein. Um den entsprechenden Komfort für den Fahrer zu gewährleisten, sollte bei abgeschaltetem Verbrennungsmotor die Fahrerkabine ausreichend beheizbar, im Sommer klimatisierbar und im Übrigen mit Strom versorgt werden können. Die benötigte Heizwärme wird üblicherweise mittels einer Standheizung bereit gestellt, die Kälte Wird aus mitzuführenden Kältespeichern entnommen, die zuvor im Fahrbetrieb durch die Klimaanlage aufgeladen worden sind und die Stromversorgung wird mit Hilfe der während der Fahrt aufgeladenen Batterien realisiert.

Um die Versorgung mit Wärme, Kälte und Strom während der Ruhephase für den Fahrer auch bei abgeschaltetem Motor sicherzustellen, sind eine Vielzahl von Hilfssystemen, wie etwa ein kleiner zusätzlicher Dieselmotor, Brennstoffzellen oder Standheizung mit Thermoelektrogeneratoren als Hilfsenergieeinheit vorgeschlagen worden. Derartige Systeme werden zusätzlich mit den benötigten Nebenaggregaten, wie etwa Pumpen, Wärmetauscher, Reformer oder Ventilen zusätzlich in das Fahrzeug eingebaut. Letztendlich wird eine Hilfsversorgungseinrichtung (APU) benötigt, sobald der Verbrennungsmotor abgestellt ist und dennoch bestimmte Komfortfunktionen, wie etwa Heizung, Klimatisierung und / oder Stromversorgung sichergestellt werden sollen. Da diese Hilfsversorgungseinrichtungen oftmals einen nicht unerheblichen Einbauraum benötigen, werden diese derzeit nicht standardmäßig verbaut.

In diesem Zusammenhang ist aus der DE 10 2006 043 139 A1 eine Vorrichtung zur Gewinnung von mechanischer oder elektrischer Energie aus der Abwärme eines Kraftfahrzeugverbrennungsmotors bekannt. Bei der beschriebenen technischen Lösung ist mindestens ein mit einer Abwärmequelle des Verbrennungsmotors, der die Wärme auf einem vergleichweise geringen Temperaturniveau bereitstellt, in Verbindung stehendes thermisches Wandlungssystem bekannt, das zumindest einen Teil der von dem Verbrennungsmotor freigesetzten Abwärme in mechanische oder elektrische Energie umwandelt. Der wesentliche Gedanke der beschriebenen technischen Lösung besteht darin, dass alternativ zu den bekannten Systemen zur Abwärmenutzung, die sich vornehmlich bekannter Dampfkreisprozesse bedienen, auch Wärme nutzbar sein soll, die auf einem vergleichsweise niedrigen Temperaturniveau zur Verfügung gestellt wird. Daher werden in diesem Fall neben thermoelektrischen Wandlern, wie beispielsweise Thermoelemente, oder als thermoionische Generatoren ausgeführte Thermowandler auch thermodynamische Kreisprozesse mit bei niedrigen Temperaturen leicht verdampfbaren Arbeitsmitteln zur Stromerzeugung eingesetzt. Als Arbeitsmittel können neben Wasser mit entsprechenden Frostschutzmitteln alle bekannten Kältemittel, die in Fahrzeugklima- und Fahrzeugkühlanlagen eingesetzt werden, Verwendung finden.

Die US 2007/234721 A1 offenbart eine Vorrichtung mit einem Verbrennungsmotor, bei der über einen Brenner ein zusätzlich heißes Abgas auf eine einem Abgasturbolader nachgeschaltete Turbine geleitet werden kann, die mit einem Generator gekoppelt ist. Ferner werden die Abgase des Verbrennungsmotors nach dem Turbolader ebenfalls auf eine mit dem Generator gekoppelte Zusatzturbine geleitet.

Darüber hinaus ist beispielsweise aus der DE 10 2007 004 765 A1 ein Verfahren zum Temperieren eines Kraftfahrzeugs im Stillstand bekannt. Bei dem beschriebenem Verfahren wird eine sogenannte Resttemperierungseinheit, die die während der Fahrt des Fahrzeugs angefallene Wärme und / oder Kälte zur Verfügung stellt, mit einer aktiven Temperierungseinheit, insbesondere einer Standheizung, kombiniert. In diesem Zusammenhang zeichnet sich die beschriebenen technische Lösung dadurch aus, dass eine Steuerung vorgesehen ist, durch die der Fahrzeuginnenraum nach Abstellen des Motors wunschgemäß temperiert wird und die hierfür benötigte Wärme und / oder Kälte automatisiert und bedarfsangepasst mit Hilfe der Resttemperierungseinheit sowie der aktiven Temperierungseinheit zur Verfügung gestellt werden.

Ausgehend von dem bekannten Stand der Technik liegt der Erfindung die Aufgabe zugrunde, eine Antriebseinheit, insbesondere für mobile Anwendungen wie etwa Kraftfahrzeugantriebe, anzugeben, die sowohl über ein System zur Abwärmenutzung verfügt und darüber hinaus auf vorteilhafte Weise auch Nebenverbraucher mit elektrischer Energie und/oder mechanischer Arbeit versorgen kann, ohne das hierfür zusätzlicher Bauraum benötigt wird. Hierbei sollen die Antriebseinheit sowie das Betriebsverfahren derart realisierbar sein, dass die einzelnen Komponenten vorzugsweise sowohl zur Rückgewinnung von Arbeit aus der Motorverlustwärme, als auch zur Hilfsenergieversorgung während der Ruhephasen eines Fahrzeugs anwendbar sind. Die Anzahl der insgesamt in einem entsprechend ausgeführten Fahrzeug verwendeten Komponenten soll aufgrund des Einsatzes der anzugebenden Antriebseinheit minimiert werden.

Die zuvor beschriebene Aufgabe wird mit einer Antriebseinheit gemäß Anspruch 1 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Erfindungsgemäß ist eine Antriebseinheit eines Kraftfahrzeugs mit einer an einer Antriebswelle gekoppelten Brennkraftmaschine und mit einem Abwärmenutzungssystem, durch das zumindest ein Teil der aus der Brennkraftmaschine und / oder aus einem der Brennkraftmaschine nachgeschalteten Abgassystem abgeführten Abwärme mittels eines thermisch angetriebenen Energiewandlers mit Generator in elektrische Energie umgewandelt wird, die wenigstens teilweise zumindest einem Nebenverbraucher des Kraftfahrzeugs zuleitbar ist, derart weitergebildet worden, dass zusätzlich zum Abwärmenutzungssystem eine weitere Wärmequelle vorgesehen ist, durch die der thermisch angetriebene Energiewandler mit Wärme versorgbar ist.

Bei der erfindungsgemäß ausgeführten Antriebseinheit ist somit zusätzlich zu einer ersten Einrichtung zur Nutzung von Abwärme mit angeschlossenem Stromerzeuger, die vorzugsweise als thermodynamische Wärmerückgewinnungseinrichtung ausgeführt ist, eine weitere Wärmequelle vorgesehen. Diese weitere Wärmequelle stellt hierbei Wärme bereit, aus der wiederum Strom generiert werden kann. Die Wärmerückgewinnungseinrichtung mit angeschlossenem Stromerzeuger kann somit sowohl im Fahrbetrieb des Kraftfahrzeugs als auch während der Ruhephasen, also bei abgeschaltetem Verbrennungsmotor, als Hilfsenergiequelle verwendet werden. Die erfindungsgemäße Antriebseinheit verfügt somit sowohl über ein System zur Abwärmenutzung der Brennkraftmaschine als auch über eine Anlage zur Versorgung des Fahrzeugs mit Hilfsenergie, vorzugsweise während der Stillstandszeiten des Verbrennungsmotors. Wesentlich hierbei ist, dass durch die erfindungsgemäß vorgesehene zweite Wärmequelle Wärme für den thermisch angetriebenen Energiewandler lieferbar ist und die zweite Wärmequelle darüber hinaus an das Abwärmenutzungssystem angeschlossen ist.

Der thermisch angetriebene Energiewandler kann somit wahlweise von der Motorabwärme oder von der zweiten Wärmequelle oder gemeinsam von beiden Wärmequellen mit Wärme versorgt werden. Durch diese Maßnahme ist es denkbar, dass der thermisch angetriebene Energiewandler mit Generator elektrische Energie oder mechanische Arbeit sowohl für während des Fahrbetriebs des Kraftfahrzeugs benötigte Aggregate als auch für die während der Ruhephasen des Fahrzeugs benötigten Nebenverbraucher und das Bordnetz liefert.

In einer speziellen Ausführungsform der Erfindung weist der thermisch angetriebene Energiewandler wenigstens eine Dampfexpansionsmaschine mit einem mechanisch daran gekoppelten Generator zur Umwandlung von mechanischer Arbeit in elektrische Energie auf. Vorzugsweise ist die Dampfexpansionsmaschine als Kolbenmaschine ausgeführt. Alternativ ist es denkbar, dass die Dampfexpansionsmaschine als ein- oder mehrstufige Dampfturbine ausgeführt ist, die wiederum mechanisch an einen Generator zur Erzeugung elektrischer Energie gekoppelt ist.

Weiterhin ist es denkbar, den Grundaufbau für die zur Realisierung eines Dampfkreisprozesses benötigten Komponenten dahingehend zu vereinfachen, dass als Bestandteil des Energiewandlers ein Freikolbenmotor mit integriertem Lineargenerator verwendet wird. Durch eine derartige Integration einer Dampfexpansionsmaschine und eines Generators in einer Baueinheit wird der insgesamt benötigte Bauraum minimiert.

Eine spezielle Ausführungsform der Erfindung sieht vor, weitere Komponenten, wie beispielsweise den Verdampfer, in dem das im Abwärmenutzungskreislauf umwälzende Arbeitsmedium zumindest teilweise verdampft wird und / oder den Kondensator, in dem das Arbeitsmedium zumindest teilweise verflüssigt wird, in jeweils hochintegrativen Bauteilen zusammenzufassen.

In einer weiteren geeigneten Gestaltung der erfindungsgemäßen Antriebseinheit verfügt der thermisch angetriebene Energiewandler daher über wenigstens einen Verdampfer, in dem mittels der Abwärme aus der Brennkraftmaschine und / oder aus den der Brennkraftmaschine nachgeschalteten Abgassystem und / oder aus dem Fahrzeugkühlsystem und / oder aus der zweiten Wärmequelle ein Arbeitsmedium zumindest teilweise verdampft wird. In diesem Fall sind der Wärmetauscher, der vom Abgas durchströmt wird, der Verdampfer und mindestens eine weitere Wärmequelle in bevorzugter Ausführung als hoch integratives Bauteil ausgeführt.

Eine weiteren geeignete Gestaltung der erfindungsgemäßen Antriebseinheit sieht vor, dass der thermisch angetriebene Energiewandler über wenigstens einen Verdampfer verfügt, der aufgrund der Zufuhr von verbrennungsmotorischer Abwärme und / oder von durch die zweite Wärmequelle erzeugter Wärme das Arbeitsmedium zumindest teilweise verdampft. In diesem Fall ist der Verdampfer vorzugsweise gemeinsam mit einer Dampfexpansionsmaschine, in der das dampfförmige Arbeitsmedium wenigstens teilweise entspannt wird, als ein hochintegratives Bauteil ausgeführt.

In einer weiteren besonderen Ausführungsform der erfindungsgemäßen Antriebseinheit verfügt der thermisch angetriebene Energiewandler über wenigstens einen Kondensator, in dem das entspannte Arbeitsmittel zumindest teilweise auskondensiert, also verflüssigt wird. Auf vorteilhafte Weise ist der Kondensator gemeinsam mit einer Dampfexpansionsmaschine mit Generator als ein hochintegratives Bauteil ausgeführt.

Alternativ oder in Ergänzung zu den zuvor beschriebenen thermisch angetriebenen Energiewandlers sieht eine spezielle Weiterbildung der Erfindung vor, dass der Energiewandler einen thermoelektrischen Generator, insbesondere einen den Seebeck-Effekt nutzenden Generator aufweist.

Weiterhin ist es denkbar, dass eine Ad- oder Absorptionskälteanlage vorgesehen ist, die durch das Abwärmenutzungssystem und / oder die weitere Wärmequelle mit Wärme versorgt wird, um auf diese Weise Kälte als gewünschte Nutzenergie für den Fahrzeuginnenraum zur Verfügung zu stellen. Auf die entsprechenden Ad- bzw. Absorptionskälteprozesse wird im Folgenden nicht weiter eingegangen, da diese hinlänglich bekannt sind. Wesentlich ist in diesem Zusammenhang, dass die für diese Prozesse als Antriebsenergie benötigte Wärme erfindungsgemäß durch das Abwärmenutzungssystem bzw. den Energiewandler und/oder die weitere Wärmequelle bereitgestellt wird.

Eine spezielle Ausführungsform der Erfindung sieht ferner vor, dass die weitere Wärmequelle einen Ölbrenner, vorzugsweise einen Brenner, der den Kraftstoff verbrennt, den das jeweilige Fahrzeug benötigt, aufweist. In diesem Zusammenhang ist es selbstverständlich denkbar, dass in Abhängigkeit des jeweiligen Fahrzeugtyps bzw. des verwendeten Kraftstoffs auch ein Gasbrenner, der vorzugsweise als Flächen- oder sogenannter Matrixbrenner oder Absorptionsbrenner ausgeführt ist, Verwendung findet.

In einer ganz besonders geeigneten Gestaltungsform der erfindungsgemäß ausgeführten Antriebseinheit ist eine Steuereinheit vorgesehen, mit der die weitere Quelle derart betreibbar ist, dass der Energiewandler von der weiteren Wärmequelle zumindest dann mit Wärme versorgbar ist, sobald sich die Brennkraftmaschine außer Betrieb befindet bzw. sobald diese außer Betrieb genommen wird. In diesem Zusammenhang ist es ebenfalls denkbar, innerhalb des Kraftfahrzeugs einen Wärme- und / oder Kältespeicher vorzusehen, in dem während der Fahrzeug gespeicherte Wärme und / oder Kälte gepuffert wird und nach Abschalten der Brennkraftmaschine zur Versorgung entsprechender Nebenverbraucher zur Verfügung steht. In Ergänzung hierzu ist es gemäß einer speziellen Weiterbildung denkbar, auch den thermisch angetriebenen Energiewandler mit Generator zumindest zeitweise aus einem Wärmespeicher mit der zur Stromproduktion benötigten Wärme zu versorgen.

Gemäß einer weiteren Ausführungsform der Erfindung ist es vorgesehen, dass mit der weiteren Wärmequelle der Fahrgastraum und/oder das Fahrerhaus des Kraftfahrzeugs mit Wärme versorgbar ist. Alternativ oder in Ergänzung hierzu kann selbstverständlich auch eine Ab- oder Adsorptionskältemaschine mit Wärme von der weiteren Wärmequelle versorgt werden.

Insbesondere für schwere Nutzfahrzeuge sowie Reisebusse während langer Fahrten stellt eine Nutzung der Ab- bzw. Verlustwärme der Brennkraftmaschine eine sinnvolle Möglichkeit dar, das Fahrzeug unter wirtschaftlichen und ökologischen Gesichtspunkten sinnvoll zu betreiben. Bei derartigen Fahrzeugen ist stets darauf zu achten, dass sowohl im Fahrbetrieb als auch bei Stillstand des Fahrzeugs, insbesondere auch bei gleichzeitigem Stillstand der Brennkraftmaschine des Fahrzeugs, für Heizung, Klimatisierung und Strombereitstellung gesorgt sein muss. Darüber hinaus sollte bereits heute darauf Rücksicht genommen werden, dass bei Städtereisen mit Aufenthalten im Stadtzentrum oftmals die Verbrennungsmotoren nicht oder zumindest nicht während der Stillstandszeiten des Fahrzeugs betrieben werden dürfen, da entsprechende Umweltzonen eingerichtet worden sind. Aus diesem Grund werden zukünftig in zunehmendem Maße, insbesondere für Reisebusse, Hilfsenergieversorgungssysteme benötigt, die das Fahrzeug während der Stillstandszeiten der Brennkraftmaschine zuverlässig mit der jeweils benötigten Energieform versorgen.

Im Folgenden wird die Erfindung ohne Beschränkung des allgemeinen Erfindungsgedankens unter Bezugnahme auf die Figuren näher erläutert. Es zeigen:
- Figur 1:: Dampfprozess mit einer Expansionsmaschine, in dem zwei Wärmequellen die für die Dampferzeugung benötigte Wärme liefern;
- Figur 2:: Antriebseinheit mit Wärmetauscher und weiterer Wärmequelle und einer Stirlingmaschine und / oder einem weiteren Thermogenerator;
- Figur 3:: hochintegratives Bauteil, bei dem der Brenner direkt in den ersten Dampferzeuger integriert ist sowie
- Figur 4:: Abwärmenutzungssystem mit einer Expansionsmaschine mit integriertem Generator.

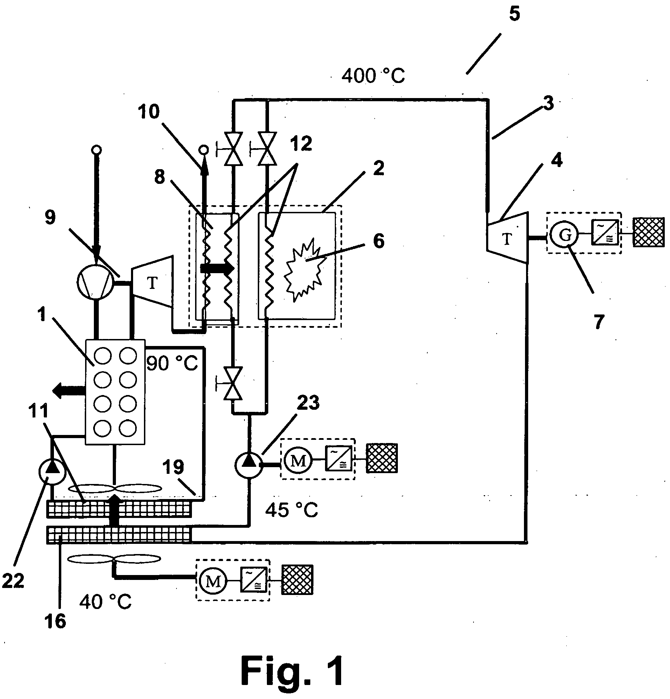

Figur 1 zeigt ein Schaltschema einer Anlagenkonfiguration, bei der einerseits die Abwärme eines Verbrennungsmotors 1 in Form der Wärme des Motorabgases und andererseits die Wärme aus einer als Brenner 6 ausgeführten weiteren Wärmequelle 2 an ein Abwärmenutzungssystem 5 mit Dampfkreislauf 3 übertragbar und mittels einer Expansionsmaschine 4 nutzbar ist. Das Abwärmenutzungssystem 5 mit Dampfkreislauf 3 kann somit wahlweise oder ergänzend von zwei Wärmequellen 1, 2 mit Wärme versorgt werden. Bei dem dargestellten Ausführungsbeispiel wird die Wärme genutzt, um in wenigstens einem Verdampfer ein Arbeitsmittel zu verdampfen, den hierbei entstehenden Dampf einer Expansionsmaschine 4 zur Entspannung zuzuführen und schließlich mittels eines mechanisch an die Expansionsmaschine 4 gekoppelten Generators 7 elektrische Energie zu erzeugen.

Die erste Wärmequelle wird durch den Verbrennungsmotor 1 und einen nachgeschalteten Abgaswärmetauscher 8, in dem die im Abgas enthaltene Wärme zumindest teilweise an das Arbeitsmittel des Abwärmenutzungssystems 5 übertragen und auf diese Weise eine Verdampfung des Arbeitsmittels erreicht wird, gebildet. Hierbei ist der Abgaswärmetauscher 8 im Bereich des Abgassystems 10 derart angeordnet, dass das den Abgasturbolader 9 verlassende Abgas in den Wärmetauscher 8 strömt. Bei einer geeigneten Auslegung ist es ebenfalls denkbar, die Wärme des Motorkühlkreislaufs 11, eines Ladeluftkühlers, eines weiteren Abgaswärmeübertragers, der das Abgas vor einer zumindest teilweisen Rückführung in die Ladeluft abkühlt, und/oder die Abwärme einer Abgasnachbehandlung alternativ oder ergänzend zu der in Figur 1 dargestellten Verwendung von Abgaswärme zu nutzen.

Die in Figur 1 gezeigte weitere Wärmequelle 2 ist als Brenner 6 ausgeführt, der mit der gleichen Kraftstoffart wie das Fahrzeug, in diesem Beispiel Dieselkraftstoff, versorgt wird. Dem Brenner 6 ist ein Verdampfer 12 nachgeschaltet, dem einerseits das den Brenner 6 verlassende Brenngas und andererseits flüssiges Arbeitsmittel zugeführt wird. Das flüssige Arbeitsmittel wird in dem Verdampfer 12 verdampft und schließlich der Expansionseinheit 4 zur Entspannung zugeführt. Der Brenner 6 mit seiner Brennkammer sowie der Verdampfer 12 sind hierbei auf vorteilhafte Weise in eine gemeinsame Baueinheit integriert. Als Brenner 6 zur Erzeugung des Brenngases kann wahlweise ein Brenner mit offener Flamme, wie er auch für die Standheizung benötigt wird, oder auch ein Absorptionsbrenner eingesetzt werden.

Das wesentliche Merkmal der in Figur 1 dargestellten Anlagenkonfiguration besteht darin, dass die zur Dampferzeugung und damit letztendlich für die Erzeugung elektrischer Energie benötigte Wärme wahlweise oder ergänzend der Abgaswärme oder, insbesondere bei abgeschaltetem Verbrennungsmotor, dem mit Hilfe des Brenners 6 erzeugten Brenngases entnommen werden kann. Die Versorgung des Fahrzeugs mit Wärme und Strom wird mit der beschriebenen technischen Lösung somit in allen Betriebssituationen, also sowohl in einem Fahrbetrieb mit teilweise erheblich variierenden Lastanforderungen als auch in einer Betriebspause des Fahrzeugs, während der der Verbrennungsmotor 1 in der Regel außer Betrieb genommen wird, sichergestellt werden.

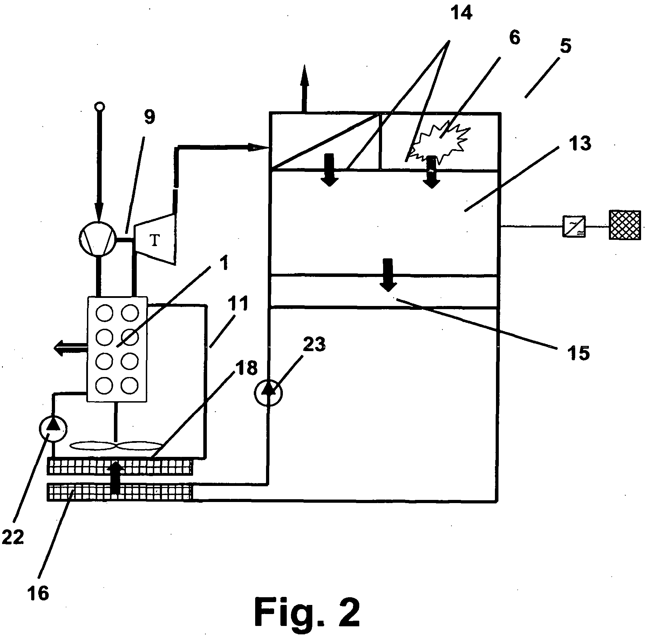

Figur 2 zeigt eine weitere Ausgestaltung eines erfindungsgemäßen Anlagenkonzepts. Auch in diesem Fall stehen zwei Wärmequellen zur Verfügung, die eine Einheit zur Erzeugung von elektrischer Energie jeweils einzeln oder gemeinsam mit der benötigten Wärme versorgen. Abweichend von der in Figur 1 dargestellten technischen Lösung ist an Stelle einer Expansionsmaschine, die ein Arbeitsmittel entspannt, eine Einheit zur Erzeugung elektrischer Energie 13 vorgesehen, die zur Stromproduktion den Temperaturunterschied zwischen einer heißen 14 und einer kalten Seite 15 nutzt. Bei der in Fig. 2 dargestellten Einheit zur Stromproduktion 13 handelt es sich um einen Stirling-Motor, dessen Abtriebswelle wiederum mechanisch an einen Generator 7 gekoppelt ist. Ebenso ist es denkbar, die Einheit zur Stromproduktion als einen thermoelektrischen Generator auszuführen, der den Temperaturunterschied zwischen der heißen 14 und der kalten Seite 15 unter Ausnutzung des Seebeck-Effekts nutzt.

Gleich welche der beiden zuvor genannten Einheiten zur Stromproduktion 13 verwendet wird, ist an der kalten Seite 15 ein Kühlkreislauf vorgesehen, um die Verlustwärme abzuführen. Zur Abführung der Verlustwärme an der kalten Seite 15 werden ein Wärmeübertrager, eine Kühlmittelpumpe sowie ein luftgekühlter Wärmeübertrager, auch als Kühler-Lüftersystem bezeichnet, verwendet.

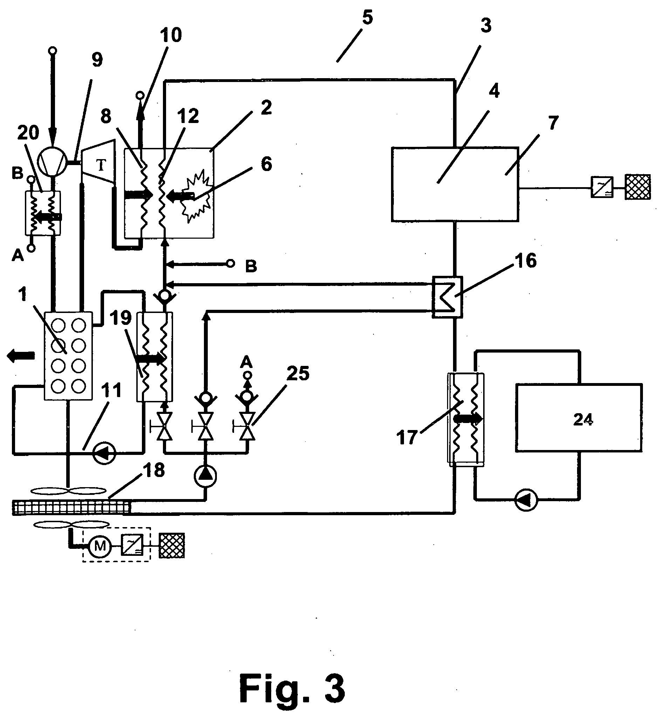

Figur 3 zeigt eine erfindungsgemäß ausgeführte Antriebseinheit eines Fahrzeugs mit einem Abwärmenutzungssystem 5, aus dem die abgeführte Wärme sowohl in einer Einheit zur Erzeugung elektrischer Energie als auch zur Bereitstellung von Nutzwärme für das Fahrzeug verwendet wird. Ein wesentliches Merkmal besteht zunächst darin, dass nur ein Verdampfer 12 vorgesehen ist, in den entweder wahlweise oder gemeinsam Wärme aus der Abgaswärme und/oder aus der Wärme des mit der weiteren, als Brenner 6 ausgeführten Wärmequelle 2 zur Verdampfung eines Arbeitsmittels einkoppelbar ist. Der Brenner ist hierbei auf vorteilhafte Weise in den Verdampfer 12 integriert.

Des Weiteren ist in der Anlagenkonfiguration gemäß Fig. 3 in Strömungsrichtung nach dem Kondensator 16, hier als Rekuperator, ein weiterer Wärmeübertrager 17 vorgesehen, mit dem die im wieder verflüssigten Arbeitsmittel enthaltene Restwärme zumindest teilweise als Nutzwärme an eine Wärmesenke 24 in Form einer Fahrzeugheizung und/oder einer Ad- oder Absorptionskälteanlage übertragen werden kann, bevor das Arbeitsmittel in einem Fahrzeugkühler 18 wieder auf die benötigte Ausgangstemperatur gebracht wird. Grundsätzlich ist es unter Berücksichtigung des jeweils benötigten Temperaturniveaus ebenfalls denkbar, den Kondensator 16 sowie den Heizungswärmeübertrager 17 gegenüber der in Figur 3 dargestellten Variante in umgekehrter Reihenfolge von dem Arbeitsmittel durchströmen zu lassen.

Wie der Figur 3 im Übrigen zu entnehmen ist, kann das wieder im Ausgangszustand befindliche Arbeitsmittel nach Durchströmen des Fahrzeugkühlers 18 jeweils zumindest teilweise durch die kalte Seite des Kondensators 16, einen Motorkühler 19 sowie anschließend durch den Verdampfer 12 und/oder einen Ladeluftkühler 20 geleitet werden. Genauso könnte das Arbeitsmittel ergänzend oder alternativ durch einen Abgaswärmetauscher, in dem das Motorabgas vor einer Einleitung in die Motorzuluft abgekühlt wird, geleitet werden. In jedem Fall nimmt das Arbeitsmittel in den vorgenannten Wärmeübertragern jeweils zumindest teilweise Wärme auf, die auf diese Weise dem Dampfkreisprozess zugeführt wird. Die Regelung des Volumenstroms des Arbeitsmittels erfolgt bedarfsangepasst mit Hilfe entsprechender Regelventile.

Weiterhin ist die Abgabe der Motorwärme über einen Wärmetauscher anstelle 19 eines geeigneten Kühlernetzes dargestellt. Auf diese Weise kann die Wärme des Motorkühlwassers zur Vorheizung des zu verdampfenden Arbeitsmittels verwendet werden. Das verbleibende Kühlernetz wird entsprechend größer ausgelegt, um die anfallende Restwärme, die nicht mehr genutzt werden kann, an die Umgebung abzugeben.

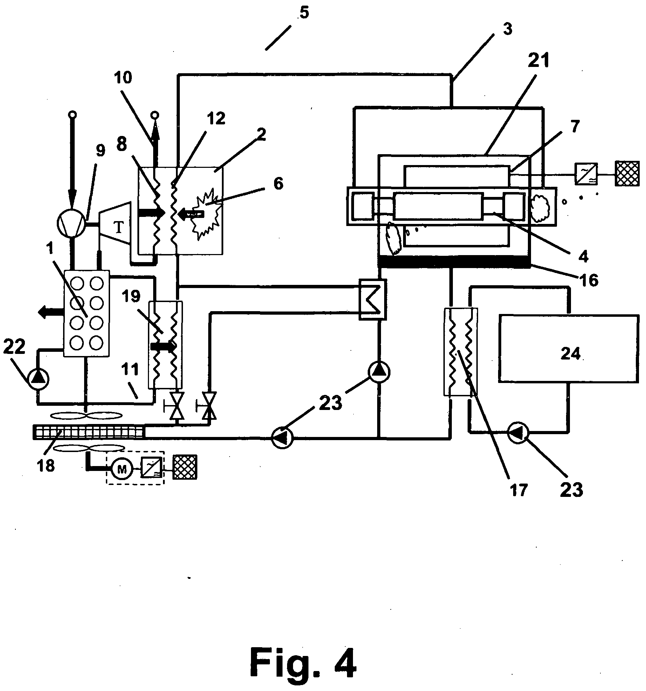

Abschließend zeigt Figur 4 eine weitere denkbare erfindungsgemäße Anlagenkonfiguration, die zu einer nochmaligen Reduzierung der Anzahl der benötigten Komponenten führt. Wesentlich für die dargestellte technische Lösung ist, dass eine Expansionsmaschine 21 mit integriertem Generator 7, nämlich ein Dampflineargenerator, verwendet wird. Ein Dampflineargenerator bietet unter anderem den Vorteil, dass das Arbeitsmittel bis in den Nassdampfbereich entspannt werden kann. Auf diese Weise wird eine erste Kondensatorstufe in die Einheit zur Expansion des Dampfes und Erzeugung elektrischer Energie mittels Generator integriert. Der in Strömungsrichtung des Arbeitsmittels dem Dampflineargenerator 21 nachgeschaltete Kondensator 16 kann somit im Vergleich zu Systemen ohne erste Kondensatorstufe im Bereich der Expansionseinheit kleiner und kompakter ausgelegt werden.

### Bezugszeichenliste

- 1: Brennkraftmaschine
- 2: weitere Wärmequelle
- 3: Dampfkreislauf
- 4: Expansionseinheit
- 5: Abwärmenutzungssystem
- 6: Brenner
- 7: Generator
- 8: Abgaswärmetauscher
- 9: Abgasturbolader
- 10: Abgassystem
- 11: Motorkühlkreislauf
- 12: Verdampfer
- 13: Einheit zur Erzeugung elektrischer Energie unter Ausnutzung eines Temperaturunterschieds
- 14: heiße Seite
- 15: kalte Seite
- 16: Kondensator/Rekuperator
- 17: Heizungswärmeübertrager
- 18: luftgekühlter Wärmeübertrager/Lüfter-Kühlsystem
- 19: Motorkühlungswärmeübertrager
- 20: Ladeluftkühler
- 21: Dampflineargenerator mit integriertem Kondensator
- 22: Kühlmittelpumpe
- 23: Arbeitsmittelpumpe, Arbeitsmittelverdichter
- 24: Wärmesenke
- 25: Regelventil

## Patentansprüche

1. Antriebseinheit eines Kraftfahrzeugs mit einer an eine Abtriebswelle gekoppelten Brennkraftmaschine (1) und mit einem Abwärmenutzungssystem (5), durch das zumindest ein Teil der aus der Brennkraftmaschine (1) und/oder aus einem der Brennkraftmaschine (1) nachgeschalteten Abgassystem (10) abgeführten Abwärme mittels eines thermisch angetriebenen Energiewandlers (4, 13, 21) in elektrische Energie umgewandelt wird,
wobei zusätzlich zum Abwärmenutzungssystem (5) eine weitere Wärmequelle (2) vorgesehen ist, durch die der thermisch angetriebene Energiewandler (4, 13, 21) mit Wärme versorgbar ist, **dadurch gekennzeichnet,**
**dass** die vom Energiewandler (4, 13, 21) umgewandelte elektrische Energie wenigstens teilweise zumindest einem Nebenverbraucher und/oder einem elektrischen Bordnetz des Kraftfahrzeugs zuleitbar ist und
**dass** der thermisch angetriebene Energiewandler wenigstens eine in einem Dampfkreislauf (3) angeordnete Dampfexpansionsmaschine (4) mit einem mechanisch daran gekoppelten Generator (7) zur Umwandlung von mechanischer Arbeit in elektrische Energie aufweist.

2. Antriebseinheit nach Anspruch 1,
**dadurch gekennzeichnet, dass** die Abwärme aus einem die Brennkraftmaschine im Betrieb kühlenden Kühlsystem abgeführt wird.

3. Antriebseinheit nach einem der Ansprüche 1 oder 2,
**dadurch gekennzeichnet, dass** der thermisch angetriebene Energiewandler eine Dampfturbine (4) mit einem mechanisch daran gekoppelten Generator (7) aufweist.

4. Antriebseinheit nach einem der Ansprüche 1 bis 2,
**dadurch gekennzeichnet, dass** der thermisch angetriebene Energiewandler eine Kolbenmaschine (4) mit einem mechanisch daran gekoppelten Generator (7) aufweist.

5. Antriebseinheit nach einem der Ansprüche 1 bis 4,
**dadurch gekennzeichnet, dass** der thermisch angetriebene Energiewandler einen Freikolbenmotor (4) mit integriertem Lineargenerator (7) aufweist.

6. Antriebseinheit nach einem der Ansprüche 1 bis 5,
**dadurch gekennzeichnet, dass** wenigstens ein Verdampfer (8, 12) vorgesehen ist, in dem mittels der Abwärme aus der Brennkraftmaschine (1) und/oder aus dem der Brennkraftmaschine (1) nachgeschalteten Abgassystem (10) ein Arbeitsmedium zumindest teilweise verdampft wird, und der Verdampfer (8, 12) mit einer Dampfexpansionsmaschine (4), in der das dampfförmige Arbeitsmedium wenigstens teilweise entspannt wird, als ein integratives Bauteil ausgeführt ist.

7. Antriebseinheit nach Anspruch 3,
**dadurch gekennzeichnet, dass** ein Kondensator (16) zur Verflüssigung des zumindest teilweise dampfförmigen Arbeitsmediums vorgesehen ist, der mit dem Generator (7) als ein integratives Bauteil ausgeführt ist.

8. Antriebseinheit nach einem der Ansprüche 1 bis 7,
**dadurch gekennzeichnet, dass** zur Wärmeübertragung ein integratives Bauteil vorgesehen ist, das einen vom Abgas durchströmten Abgaswärmetauscher (8), einen Verdampfer, in dem das Arbeitsmedium wenigstens teilweise verdampft wird und eine weitere Heizquelle (6) aufweist.

9. Antriebseinheit nach einem der Ansprüche 1 bis 8,
**dadurch gekennzeichnet, dass** der thermisch angetriebene Energiewandler einen thermoelektrischen Generator (13), insbesondere einen den Seebeck-Effekt nutzenden Generator, aufweist.

10. Antriebseinheit nach einem der Ansprüche 1 bis 9,
**dadurch gekennzeichnet, dass** der thermisch angetriebene Energiewandler über einen Stirlingmotor (13) verfügt.

11. Antriebseinheit nach einem der Ansprüche 1 bis 10,
**dadurch gekennzeichnet, dass** wenigstens eine die Abwärme nutzende Ab- und/oder Adsorptionskälteanlage vorgesehen ist.

12. Antriebseinheit nach einem der Ansprüche 1 bis 11,
**dadurch gekennzeichnet, dass** der thermisch angetriebene Energiewandler von der weiteren Wärmequelle (2) zumindest mit Wärme versorgbar ist, sobald sich die Brennkraftmaschine (1) außer Betrieb befindet.

13. Antriebseinheit nach einem der Ansprüche 1 bis 12,
**dadurch gekennzeichnet, dass** mit der weiteren Wärmequelle (2) ein Heizungssystem des Kraftfahrzeugs mit Wärme versorgbar ist.

14. Antriebseinheit nach einem der Ansprüche 1 bis 13,
**dadurch gekennzeichnet, dass** mit der weiteren Wärmequelle (2) eine Ab- oder Adsorptionskälteanlage des Kraftfahrzeugs mit Wärme versorgbar ist, und dass die weitere Wärmequelle (2) einen Öl- oder Gasbrenner (6) aufweist.

## Claims

1. A drive unit of a motor vehicle having an internal combustion engine (1) which is coupled to an output shaft and having a heat recovery system (5) by means of which at least a portion of the waste heat which is conducted away from the internal combustion engine (1) and/or from an exhaust system (10) connected downstream of the internal combustion engine (1) is converted into electrical energy by means of a thermally driven energy converter (4, 13, 21), wherein a further heat source (2) by means of which the thermally driven energy converter (4, 13, 21) can be supplied with heat, is provided in addition to the heat recovery system (5), **characterized in that in that** the electrical energy which is converted by the energy converter (4, 13, 21) can be at least partially fed to at least one secondary consumer and/or one electrical on-board power system of the motor vehicle, and
**in that** the thermally driven energy converter has at least one vapour expansion machine (4) which is arranged in a vapour circuit (3) and has a generator (7) coupled mechanically thereto for converting mechanical work into electrical energy.

2. The drive unit according to Claim 1,
**characterized in that** the waste heat is conducted away from a cooling system which cools the internal combustion engine during operation.

3. The drive unit according to one of Claims 1 or 2, **characterized in that** the thermally driven energy converter has a vapour turbine (4) with a generator (7) which is coupled mechanically thereto.

4. The drive unit according to one of Claims 1 to 2, **characterized in that** the thermally driven energy converter has a piston machine (4) with a generator (7) which is coupled mechanically thereto.

5. The drive unit according to one of Claims 1 to 4, **characterized in that** the thermally driven energy converter has a free piston engine (4) with an integrated linear generator (7).

6. The drive unit according to one of Claims 1 to 5, **characterized in that** at least one vapourizer (8, 12) is provided in which a working medium is at least partially vaporized by means of the waste heat from the internal combustion engine (1) and/or from the exhaust system (10) connected downstream of the internal combustion engine (1), and the vapourizer (8, 12) is embodied as an integral component with a vapour expansion machine (4) in which the vapourous working medium is at least partially relaxed.

7. The drive unit according to Claim 3, **characterized in that** a condenser (16) is provided for liquefying the at least partially vapourous working medium, which condenser (16) is embodied as an integral component with the generator (7).

8. The drive unit according to one of Claims 1 to 7, **characterized in that** in order to transmit heat an integral component is provided which has an exhaust gas heat exchanger (8) through which exhaust gas flows, a vapourizer in which the working medium is at least partially vaporized, and a further heat source (6).

9. The drive unit according to one of Claims 1 to 8, **characterized in that** the thermally driven energy converter has a thermo-electric generator (13), in particular a generator which uses the Seebeck effect.

10. The drive unit according to one of Claims 1 to 9, **characterized in that** the thermally driven energy converter has a Stirling engine (13).

11. The drive unit according to one of Claims 1 to 10, **characterized in that** at least one absorption and/or adsorption refrigeration system which uses the waste heat is provided.

12. The drive unit according to one of Claims 1 to 11, **characterized in that** the thermally driven energy converter can be supplied at least with heat from the further heat source (2) as soon as the internal combustion engine (1) is not operational.

13. The drive unit according to one of Claims 1 to 12, **characterized in that** a heating system of the motor vehicle can be supplied with heat with the further heat source (2).

14. The drive unit according to one of Claims 1 to 13, **characterized in that** an absorption or adsorption refrigeration system of the motor vehicle can be supplied with heat with the further heat source (2), and **in that** the further heat source (2) has an oil burner or gas burner (6).

## Revendications

1. Unité d'entraînement d'un véhicule automobile comprenant un moteur à combustion interne (1) accouplé à un arbre de prise de force et un système de récupération de la chaleur perdue (5) par le biais duquel au moins une partie de la chaleur perdue évacuée hors du moteur à combustion interne (1) et/ou d'un système de gaz d'échappement (10) monté en aval du moteur à combustion interne (1) est convertie en énergie électrique au moyen d'un convertisseur d'énergie (4, 13, 21) entraîné thermiquement,
une source de chaleur supplémentaire (2) étant prévue en plus du système de récupération de la chaleur perdue (5), laquelle permet d'alimenter en chaleur le convertisseur d'énergie (4, 13, 21) entraîné thermiquement, **caractérisée en ce que** l'énergie électrique convertie par le convertisseur d'énergie (4, 13, 21) peut être acheminée au moins en partie à au moins un consommateur secondaire et/ou à un réseau de bord électrique du véhicule automobile et
le convertisseur d'énergie entraîné thermiquement présente au moins une machine d'expansion de vapeur (4) disposée dans un circuit de vapeur (3) avec un générateur (7) accouplé mécaniquement à celle-ci pour convertir un travail mécanique en énergie électrique.

2. Unité d'entraînement selon la revendication 1, **caractérisée en ce que** la chaleur perdue est évacuée d'un système de refroidissement refroidissant le moteur à combustion interne pendant le fonctionnement.

3. Unité d'entraînement selon l'une quelconque des revendications 1 ou 2,
**caractérisée en ce que** le convertisseur d'énergie entraîné thermiquement présente une turbine à vapeur (4) avec un générateur (7) accouplé mécaniquement à celle-ci.

4. Unité d'entraînement selon l'une quelconque des revendications 1 à 2,
**caractérisée en ce que** le convertisseur d'énergie entraîné thermiquement présente une machine à piston (4) avec un générateur (7) accouplé mécaniquement à celle-ci.

5. Unité d'entraînement selon l'une quelconque des revendications 1 à 4,
**caractérisée en ce que** le convertisseur d'énergie entraîné thermiquement présente un moteur à piston libre (4) avec un générateur linéaire intégré (7).

6. Unité d'entraînement selon l'une quelconque des revendications 1 à 5,
**caractérisée en ce qu'**au moins un évaporateur (8, 12) est prévu, dans lequel un fluide de travail est évaporé au moins en partie au moyen de la chaleur perdue provenant du moteur à combustion interne (1) et/ou provenant du système de gaz d'échappement (10) monté en aval du moteur à combustion interne (1), et l'évaporateur (8, 12) est réalisé sous forme de composant intégré à une machine d'expansion de vapeur (4) dans laquelle le fluide de travail sous forme de vapeur est au moins en partie détendu.

7. Unité d'entraînement selon la revendication 3,
**caractérisée en ce qu'**il est prévu un condenseur (16) pour liquéfier le fluide de travail au moins partiellement sous forme de vapeur, lequel est réalisé sous forme de composant intégré au générateur (7).

8. Unité d'entraînement selon l'une quelconque des revendications 1 à 7,
**caractérisée en ce qu'**un composant intégré est prévu pour le transfert thermique, lequel présente un échangeur de chaleur à gaz d'échappement (8) parcouru par le gaz d'échappement, un évaporateur dans lequel le fluide de travail est au moins en partie évaporé et une source de chaleur supplémentaire (6).

9. Unité d'entraînement selon l'une quelconque des revendications 1 à 8,
**caractérisée en ce que** le convertisseur d'énergie entraîné thermiquement présente un générateur thermoélectrique (13), en particulier un générateur utilisant l'effet Seebeck.

10. Unité d'entraînement selon l'une quelconque des revendications 1 à 9,
**caractérisée en ce que** le convertisseur d'énergie entraîné thermiquement dispose d'un moteur Stirling (13).

11. Unité d'entraînement selon l'une quelconque des revendications 1 à 10,
**caractérisée en ce qu'**il est prévu au moins une installation frigorifique à absorption et/ou adsorption utilisant la chaleur perdue.

12. Unité d'entraînement selon l'une quelconque des revendications 1 à 11,
**caractérisée en ce que** le convertisseur d'énergie entraîné thermiquement peut être alimenté par la source de chaleur supplémentaire (2) au moins avec de la chaleur dès que le moteur à combustion interne (1) est arrêté.

13. Unité d'entraînement selon l'une quelconque des revendications 1 à 12,
**caractérisée en ce qu'**un système de chauffage du véhicule automobile peut être alimenté en chaleur avec la source de chaleur supplémentaire (2).

14. Unité d'entraînement selon l'une quelconque des revendications 1 à 13,
**caractérisée en ce qu'**une installation frigorifique à absorption ou adsorption du véhicule automobile peut être alimentée en chaleur avec la source de chaleur supplémentaire (2) et **en ce que** la source de chaleur supplémentaire (2) présente un brûleur à huile ou à gaz (6).
